# EUROPEAN PATENT APPLICATION

(11) **EP 4 528 516 A1**
(43) Date of publication of application: **26.03.2025**
(21) Application number: 23825896.6
(22) Date of filing: 11.04.2023
(51) Int. Cl.: G06F 11/14

(54) **DATA PROCESSING SYSTEM, DATA PROCESSING METHOD AND APPARATUS, AND RELATED DEVICE**

(30) Priority: 22.06.2022 CN 202210715668; 23.09.2022 CN 202211170871
(71) Applicant: Huawei Technologies Co., Ltd., Shenzhen, Guangdong 518129 (CN)
(72) Inventor: ZENG, Hongli, Shenzhen, Guangdong 518129 (CN); WANG, Xiuwu, Shenzhen, Guangdong 518129 (CN)
(74) Representative: Körber, Martin Hans
(86) International application number: PCT/CN2023/087566
(87) International publication number: WO 2023/246241

(57) **Abstract**

A data processing system is provided. The data processing system includes a first subsystem, a second subsystem, a receiving unit, and a processing unit. The receiving unit is configured to receive a configuration instruction. The processing unit is configured to switch the first subsystem and the second subsystem from a first mode to a second mode according to the configuration instruction received by the receiving unit. The first mode is one of an AP mode and an AA mode in which the first subsystem and the second subsystem work, and the second mode is the other of the AP mode and the AA mode in which the first subsystem and the second subsystem work. In this way, the data processing system may automatically switch a working mode between the first subsystem and the second subsystem, so that the data processing system can adapt to a change in a requirement of a tenant, and experience of the tenant in using the data processing system can be effectively improved. In addition, a corresponding data processing method and apparatus, and a related device are further provided.

## Description

### TECHNICAL FIELD

This application relates to the field of data processing technologies, and in particular, to a data processing system, a data processing method and apparatus, and a related device.

### BACKGROUND

An active-active data processing system means that both subsystems in the data processing system are in a running state, and data in the two subsystems is consistent. In this way, when one subsystem cannot provide a service due to a fire, flood, or the like, the other subsystem in the data processing system may take over the service in time, so that service interruption and data loss are avoided. Therefore, reliability of the data processing system is improved.

Currently, the data processing system usually runs the two subsystems in an active-passive (AP) mode. Only a subsystem in an active (active) state can provide a service (for example, a data read/write service) for a host. A subsystem in a passive (passive) state serves as a disaster recovery end, usually backs up data in the subsystem in the active state in real time, and does not provide a service when the data processing system is not abnormal.

However, in an actual application scenario, the host may require both subsystems in the data processing system to be accessible. In this case, it is difficult for the data processing system that runs in the AP mode to meet a requirement of the host, and therefore experience of a tenant in using the data processing system is affected.

### SUMMARY

A data processing system, a data processing method and apparatus, a computing device, a storage medium, and a computer program product are provided, so that the data processing system can satisfy a change in a requirement of a host for accessing a subsystem, and experience of a tenant in using the data processing system is improved.

According to a first aspect, an embodiment of this application provides a data processing system. The data processing system includes a first subsystem and a second subsystem. In addition, the data processing system further includes a receiving unit and a processing unit. The receiving unit is configured to receive a configuration instruction, for example, may receive a configuration instruction delivered by an administrator, or may detect a change in a networking mode of a host connected to the data processing system. The processing unit is configured to switch the first subsystem and the second subsystem from a first mode to a second mode according to the configuration instruction received by the receiving unit. The first mode is one of an AP mode and an AA mode in which the first subsystem and the second subsystem work, and the second mode is the other of the AP mode and the AA mode in which the first subsystem and the second subsystem work. For example, the first subsystem and the second subsystem may be switched from the AA mode to the AP mode, or may be switched from the AP mode to the AA mode. In the AA mode, both the first subsystem and the second subsystem may provide a data processing service for the host. In the AP mode, one subsystem (a subsystem in an active state) may provide the data processing service for the host.

In this way, the data processing system may automatically switch a working mode between the first subsystem and the second subsystem based on a change in a requirement of a tenant (that is, a change in a working mode between two subsystems matching a host of the tenant), so that the data processing system can adapt to the change in the requirement of the tenant. In other words, when the tenant requires the AA mode, the data processing system may switch the working mode between the two subsystems to the AA mode required by the tenant, and when the tenant requires the AP mode again, the data processing system may switch the working mode between the two subsystems to the AP mode. Therefore, experience of the tenant in using the data processing system can be effectively improved.

In a possible implementation, the first subsystem and the second subsystem provide the data processing service, for example, a data storage service or a data computing service, for a host of a target tenant based on the first mode. In addition, after the working mode between the first subsystem and the second subsystem is switched to the second mode, the first subsystem and the second subsystem provide the data processing service for the host of the target tenant based on the second mode. In this way, the working mode may be adaptively switched based on a change in a working mode required by the host of the target tenant, to continue to provide the corresponding data processing service for the host of the target tenant. Therefore, experience of the tenant in using the data processing system can be effectively improved.

In a possible implementation, the receiving unit is specifically configured to detect that a networking mode of the host connected to the data processing system is switched from a first networking mode to a second networking mode. In this case, the receiving unit may trigger a process of switching the working mode between the first subsystem and the second subsystem, to adapt to a change in the networking mode of the host by switching the working mode between the two subsystems (different networking modes of the host may require the data processing system to provide the data processing service based on different working modes).

In a possible implementation, the first networking mode of the host may be one of a parallel networking mode and a full-cross networking mode, and the second networking mode of the host is the other of the parallel networking mode and the full-cross networking mode. In this way, when the networking mode of the host is switched between the parallel networking mode and the full-cross networking mode, the data processing system may also adaptively switch the working mode between the two subsystems, to adapt to the change in the networking mode of the host.

In a possible implementation, the data processing system further includes a third subsystem and a fourth subsystem. In addition, when the first subsystem and the second subsystem work in the second mode, the third subsystem and the fourth subsystem work in the first mode. In this way, the data processing system may provide, based on a plurality of subsystems, the AA mode and the AP mode for different hosts at the same time, so that the data processing system may select, based on a requirement of the tenant, a subsystem running in a corresponding mode to provide a service for the host of the tenant. Therefore, service requirements of different hosts in an actual application scenario can be met, and universality of the data processing system in providing services can be improved.

In a possible implementation, when the data processing system includes all of the first subsystem to the fourth subsystem, the first subsystem and the third subsystem belong to a first site, and the second subsystem and the fourth subsystem belong to a second site.

Optionally, the first subsystem to the fourth subsystem may belong to different sites.

In a possible implementation, the data processing service provided by the first subsystem and the second subsystem for the target tenant is specifically the data storage service. In this case, the first subsystem includes at least one storage array, so that the storage array is used to store data of the target tenant, to provide the data storage service.

In a possible implementation, the first subsystem communicates with the second subsystem by using at least one of IP protocol, an RDMA protocol, or an FC.

In a possible implementation, the data processing service provided by the first subsystem and the second subsystem is specifically the data storage service. In addition, the data storage service may be specifically a file storage service.

In a possible implementation, the data processing service provided by the first subsystem and the second subsystem is specifically the data storage service. In addition, the data storage service may be specifically a block storage service.

In a possible implementation, the data processing service provided by the first subsystem and the second subsystem is specifically the data storage service. In addition, the data storage service may be specifically an object storage service.

According to a second aspect, this application provides a data processing method. The data processing method is applied to a data processing system. The data processing system includes a first subsystem, a second subsystem, a receiving unit, and a processing unit. During data processing, the receiving unit receives a configuration instruction, and provides the configuration instruction for the processing unit. The processing unit switches the first subsystem and the second subsystem from a first mode to a second mode according to the configuration instruction. The first mode is one of an AP mode and an AA mode in which the first subsystem and the second subsystem work, and the second mode is the other of the AP mode and the AA mode in which the first subsystem and the second subsystem work. In this way, the data processing system may automatically switch a working mode between the first subsystem and the second subsystem based on a change in a requirement of a tenant, so that the data processing system can adapt to the change in the requirement of the tenant, and experience of the tenant in using the data processing system can be effectively improved.

In a possible implementation, the first subsystem and the second subsystem provide a data processing service for a host of a target tenant based on the first mode. In addition, after the working mode between the first subsystem and the second subsystem is switched to the second mode, the first subsystem and the second subsystem provide the data processing service for the host of the target tenant based on the second mode. In this way, the working mode may be adaptively switched based on a change in a working mode required by the host of the target tenant, to continue to provide the corresponding data processing service for the host of the target tenant. Therefore, experience of the tenant in using the data processing system can be effectively improved.

In a possible implementation, that the receiving unit receives a configuration instruction includes: The receiving unit detects that a networking mode of a host connected to the data processing system is switched from a first networking mode to a second networking mode. In this way, the receiving unit may trigger, by detecting a change in the networking mode of the host, a process of switching the working mode between the first subsystem and the second subsystem, to adapt to the change in the networking mode of the host by switching the working mode between the two subsystems.

In a possible implementation, the first networking mode is one of a parallel networking mode and a full-cross networking mode, and the second networking mode is the other of the parallel networking mode and the full-cross networking mode. In this way, when the networking mode of the host is switched between the parallel networking mode and the full-cross networking mode, the data processing system may also adaptively switch the working mode between the two subsystems, to adapt to the change in the networking mode of the host.

In a possible implementation, the data processing system further includes a third subsystem and a fourth subsystem. When the first subsystem and the second subsystem work in the second mode, the third subsystem and the fourth subsystem work in the first mode. In this way, the data processing system may provide, based on a plurality of subsystems, the AA mode and the AP mode for different hosts at the same time, so that the data processing system may select, based on a requirement of the tenant, a subsystem running in a corresponding mode to provide a service for a host of the tenant. Therefore, service requirements of different hosts in an actual application scenario can be met, and universality of the data processing system in providing services can be improved.

In a possible implementation, the first subsystem and the third subsystem belong to a first site, and the second subsystem and the fourth subsystem belong to a second site. In actual application, the first subsystem to the fourth subsystem may belong to different sites.

In a possible implementation, the first subsystem and the second subsystem are configured to provide a data storage service for the target tenant. The first subsystem includes at least one storage array. In this way, the data processing system may store data of the target tenant by using the storage array included in the subsystem, to provide the data storage service.

In a possible implementation, the first subsystem communicates with the second subsystem by using at least one of IP protocol, an RDMA protocol, or an FC.

In a possible implementation, the data storage service provided by the first subsystem and the second subsystem is a file storage service.

In a possible implementation, the data storage service provided by the first subsystem and the second subsystem is a block storage service.

In a possible implementation, the data storage service provided by the first subsystem and the second subsystem is an object storage service.

According to a third aspect, an embodiment of this application provides a data processing apparatus. The data processing apparatus is used in a data processing system. The data processing system includes a first subsystem and a second subsystem. The data processing apparatus includes: a receiving unit, configured to receive a configuration instruction; and a processing unit, configured to switch the first subsystem and the second subsystem from a first mode to a second mode according to the configuration instruction. The first mode is one of an active-passive AP mode and an active-active AA mode in which the first subsystem and the second subsystem work, and the second mode is the other of the AP mode and the AA mode in which the first subsystem and the second subsystem work.

In a possible implementation, the first subsystem and the second subsystem provide a data processing service for a host of a target tenant based on the first mode. In addition, after the working mode between the first subsystem and the second subsystem is switched to the second mode, the first subsystem and the second subsystem provide the data processing service for the host of the target tenant based on the second mode.

In a possible implementation, the receiving unit is specifically configured to detect that a networking mode of the host connected to the data processing system is switched from a first networking mode to a second networking mode.

In a possible implementation, the first networking mode is one of a parallel networking mode and a full-cross networking mode, and the second networking mode is the other of the parallel networking mode and the full-cross networking mode.

In a possible implementation, the data processing system further includes a third subsystem and a fourth subsystem. When the first subsystem and the second subsystem work in the second mode, the third subsystem and the fourth subsystem work in the first mode.

In a possible implementation, the first subsystem and the third subsystem belong to a first site, and the second subsystem and the fourth subsystem belong to a second site.

In a possible implementation, the first subsystem and the second subsystem are configured to provide a data storage service for the target tenant. The first subsystem includes at least one storage array.

In a possible implementation, the first subsystem communicates with the second subsystem by using at least one of an internet protocol IP, a remote direct memory access RDMA protocol, or a fibre channel FC.

In a possible implementation, the data storage service provided by the first subsystem and the second subsystem is a file storage service.

In a possible implementation, the data storage service provided by the first subsystem and the second subsystem is a block storage service.

In a possible implementation, the data storage service provided by the first subsystem and the second subsystem is an object storage service.

The data processing apparatus provided in the third aspect corresponds to the data processing system provided in the first aspect and the data processing method provided in the second aspect. Therefore, for technical effects of the third aspect and each implementation of the third aspect, refer to technical effects of the corresponding first aspect and each implementation of the first aspect, or refer to technical effects of the corresponding second aspect and each implementation of the second aspect. Details are not described herein again.

According to a fourth aspect, an embodiment of this application provides a computing device, including a processor and a memory. The memory is configured to store instructions. When the computing device runs, the processor executes the instructions stored in the memory, so that the computing device performs the data processing method provided in the second aspect or any implementation of the second aspect. It should be noted that the memory may be integrated into the processor, or may be independent of the processor. The computing device may further include a bus. The processor is connected to the memory through the bus. The memory may include a readable memory and a random access memory.

According to a fifth aspect, an embodiment of this application further provides a readable storage medium. The readable storage medium stores a program or instructions. When the program or the instructions run on a computer, the data processing method provided in the second aspect or any implementation of the second aspect is performed.

According to a sixth aspect, an embodiment of this application further provides a computer program product including instructions. When the computer program product runs on a computer, the computer is enabled to perform the data processing method provided in the second aspect or any implementation of the second aspect.

In addition, for technical effects brought by any implementation of the second aspect to the sixth aspect, refer to technical effects brought by different implementations of the first aspect. Details are not described herein again.

### BRIEF DESCRIPTION OF DRAWINGS

To describe technical solutions in embodiments of this application more clearly, the following briefly describes accompanying drawings required for describing embodiments. Apparently, the accompanying drawings in the following description show merely some embodiments described in this application, and a person of ordinary skill in the art may derive other drawings from these accompanying drawings.
FIG. 1 is a diagram of a structure of an example data processing system according to an embodiment of this application;
FIG. 2 is a diagram in which a subsystem in a data storage system 100 runs in an AP mode according to an embodiment of this application;
FIG. 3 is a diagram of continuing to provide a service by a subsystem 102 after a subsystem 101 is faulty in an AP mode;
FIG. 4 is a diagram in which a subsystem in a data storage system 100 runs in an AA mode according to an embodiment of this application;
FIG. 5 is a diagram of continuing to provide a service by a subsystem 104 after a subsystem 103 is faulty in an AA mode;
FIG. 6 is a diagram of switching a working mode between two subsystems from an AP mode to an AA mode according to an embodiment of this application;
FIG. 7 is a diagram of switching a working mode between two subsystems from an AA mode to an AP mode according to an embodiment of this application;
FIG. 8 is a diagram of a structure of another example data processing system according to an embodiment of this application;
FIG. 9 is a diagram of a structure of still another example data processing system according to an embodiment of this application;
FIG. 10 is a schematic flowchart of a data processing method according to an embodiment of this application;
FIG. 11 is a schematic of a data processing apparatus according to an embodiment of this application; and
FIG. 12 is a diagram of a hardware structure of a computing device according to an embodiment of this application.

### DESCRIPTION OF EMBODIMENTS

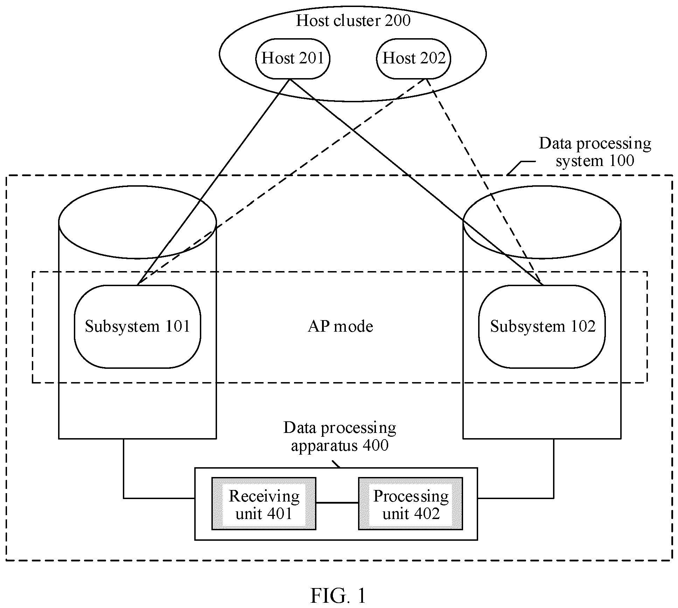

FIG. 1 is a diagram of a structure of an example data processing system. As shown in FIG. 1, the data processing system 100 may include a plurality of subsystems. In FIG. 1, an example in which the data processing system 100 includes a subsystem 101 and a subsystem 102 is used for description. In actual application, the data processing system 100 may include more subsystems.

The subsystem 101 belongs to a site (site) A. The subsystem 102 belongs to a site B. Each site may be configured to store a file provided by a tenant (or a tenant). Subsystems belonging to different sites may communicate with each other by using at least one of an internet protocol (internet protocol, IP), a remote direct data access (remote direct memory access, RDMA) protocol, or a fibre channel (fibre channel, FC), or may perform data communication with each other in another manner. This is not limited in this embodiment.

Each subsystem may include one or more devices, and is configured to provide a corresponding data computing or storage capability. For example, each subsystem includes a plurality of computing devices, a plurality of storage devices, or both a computing device and a storage device. For example, when the data processing system 100 is specifically a storage system, the plurality of subsystems in the data processing system 100 may be specifically a plurality of storage arrays, and may be configured to support a service of a data storage type, a service of a data read type, or the like requested by the host. Alternatively, the plurality of subsystems in the data processing system 100 may be different storage domains in a same storage array, for example, may be storage domains divided by tenant, or storage domains (a file domain, a block domain, an object domain, or the like) divided by service.

As shown in FIG. 1, the subsystem 101 and the subsystem 102 in the data processing system 100 may run in an AP mode, and provide a service, for example, a data storage service or a data computing service, for a host 201 in a host cluster 200. A host 202 in the host cluster 200 may be used for disaster recovery of the host 201. However, in an actual application scenario, requirements of the host 201 and the host 202 for a working mode of the data processing system 100 may change. For example, in an initial state, a tenant P may expect the data processing system 100 to run in the AP mode, for example, only one subsystem in the data processing system 100 is allowed to perform data communication with the host 201 of the tenant P. However, as a networking mode of the host of the tenant P or a service running on the host changes, the tenant P may require the data processing system 100 to run in an active-active (active-active, AA) mode, so that the host 201 and the host 202 that are of the tenant P and that are respectively active and standby can request the service and the like from the data processing system. In this case, if the data processing system 100 supports only running in the AP mode, it is difficult to adapt to a change in a requirement of the tenant P for the working mode of the data processing system 100. Similarly, if the data processing system 100 supports only running in the AA mode, when the tenant P requires that the working mode of the data processing system 100 be the AP mode, it is also difficult to adapt to a change in a requirement of the tenant P for the working mode of the data processing system 100.

Based on this, the data processing system 100 provided in this embodiment of this application may support switching of the working mode between the AP mode and the AA mode. Specifically, a data processing apparatus 400 may be configured in the data processing system 100 shown in FIG. 1. The data processing apparatus 400 includes a receiving unit 401 and a processing unit 402. In addition, the data processing apparatus may communicate with the subsystem 101 and the subsystem 102. When the host of the tenant requires the data processing system 100 to switch the working mode, the receiving unit 401 may receive a configuration instruction that may be delivered by, for example, the tenant or an administrator, and provide the configuration instruction for the processing unit 402. Therefore, the processing unit 402 may switch the working mode between the subsystem 101 and the subsystem 102 between the AP mode and the AA mode according to the configuration instruction.

In this way, the data processing system 100 may automatically switch the working mode between the subsystem 101 and the subsystem 102 based on a change in the requirement of the host of the tenant, so that the data processing system 100 can adapt to the change in the requirement of the host of the tenant, and experience of the tenant in using the data processing system 100 can be improved.

In actual application, the data processing system 100 may be, for example, a system that provides a storage service, a system that provides a computing service, or a system of another type. For ease of understanding, the following uses a data storage system as an example to describe in detail a process in which the data storage system separately runs in the AP mode and in the AA mode to provide a service for the host.

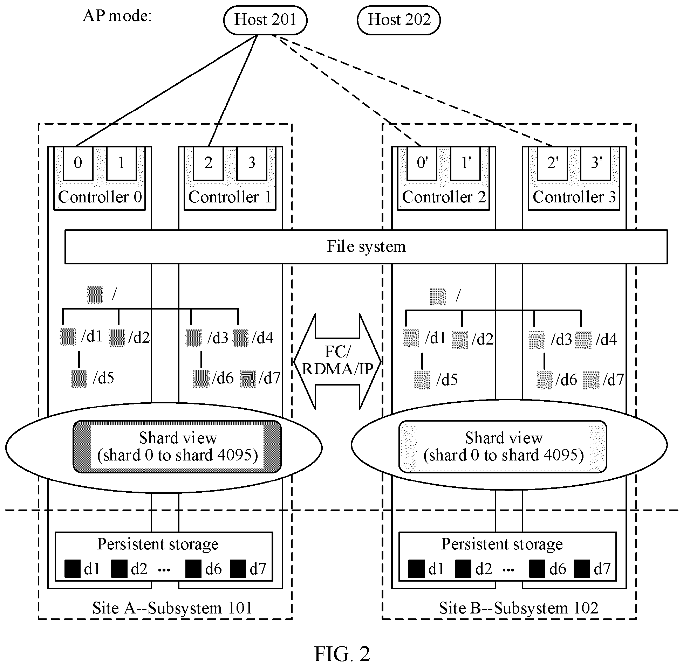

FIG. 2 is a diagram in which a subsystem in the data storage system 100 runs in the AP mode according to an embodiment of this application. As shown in FIG. 2, in the AP mode, the subsystem 101 belonging to the site A may include one or more controllers. In addition, the controller may provide a plurality of ports externally, to communicate with the host 201 in the host cluster 200 through the plurality of ports. As shown in FIG. 2, in the subsystem 101, a controller 0 may provide a port 0 and a port 1, and a controller 1 may provide a port 2 and a port 3. In addition, the subsystem 101 may perform data communication with the host 201 through the port 0 and the port 2, for example, receive a service request delivered by the host 201. In actual application, any quantity of ports in the subsystem 101 may be allocated to the host 201. This is not limited in this embodiment.

The subsystem 102 belonging to the site B includes a controller 2 and a controller 3. In addition, a port 0' of the controller 2 and a port 2' of the controller 3 may be allocated to the host 201, so that when the subsystem 101 is faulty, the host 201 may access the subsystem 102 based on the port 0' or the port 2'. In actual application, the host cluster 200 may further include the host 202. The host 202 may be used as a hot backup (that is, an online backup) of the host 201. In addition, the port 0 of the controller 0 and the port 2 of the controller 1 in the subsystem 101 may be allocated to the host 202. In this way, when the host 201 is faulty, the host 202 continues to access the subsystem 101 through the port 0 and the port 2, to take over a service on the host 201. Therefore, reliability of the service on the host is improved. Further, the port 0' of the controller 2 and the port 2' of the controller 3 in the subsystem 102 may be further allocated to the host 202, so that when the subsystem 101 is faulty, the host 202 can access the subsystem 102 through the port 0' or the port 2'.

When the data processing system 100 runs normally, the site A may serve as a primary site that provides a service for the host 201, and the host 201 can only request the site A to provide the service.

A file system (file system, FS) may be set in the subsystem 101 included in the site A. In addition, the file system has a root directory. The root directory may be stored in a memory of the subsystem 101. After the host 201 establishes a communication connection to the subsystem 101, the subsystem 101 may mount the file system to the host 201, and provide the root directory of the file system for the host 201. In this way, the host 201 may access the file system in the subsystem 101 based on the root directory of the file system, and read data in the file system. When the host 201 requests to write data to the subsystem 101, the subsystem 101 may create a subdirectory in the root directory, and store, in the subdirectory by using a file format, the data provided by the host 201. In actual application, the subsystem 101 may be configured with a plurality of IP addresses. In addition, when the host 201 is connected to the subsystem 101, the subsystem 101 may select one or more of the plurality of IP addresses, and allocate the one or more IP addresses to the host 201, so that the host 201 may access the file system in the subsystem 101 based on the the one or more allocated IP address. In addition, each IP address may be used to access all files in each subdirectory in the file system, and may support the host 201 in creating a subdirectory in the file system, to subsequently store a file in the subdirectory. For example, the host 201 creates a subdirectory d5 in the file system by using an allocated IP address 1, and creates a subdirectory d7 in the file system by using an allocated IP address 2.

In addition, a preset quantity of shards (shard) may be configured in the subsystem 101. As shown in FIG. 2, 4096 shards (that is, a shard 0 to a shard 4095) are configured. These shards are used to store directories and files of the file system in different physical nodes in the subsystem in a distributed manner, and may be used to control data distribution and access. Each physical node may be configured to store data of one or more shards. Based on data distribution of a plurality of shards, a shard view (or a data distribution view) may be generated. In addition, the shard view may indicate distribution of data on different physical nodes.

Since memory space of the subsystem 101 is generally limited, the subsystem 101 may periodically perform persistent storage on data in the memory. Specifically, the data in the memory, for example, the directory, the file, and the shard view, may be delivered to a persistent storage medium for storage, and a corresponding controller supports data reading and writing on the persistent storage medium. In this way, the subsystem 101 may continue to receive, based on released memory space, new data written by the host 201.

The subsystem 102 included in the site B, for disaster recovery of the subsystem 101, may also be configured with a file system. In addition, data (including the directory, the file in the directory, the shard view, and the like) in the file system in the subsystem 102 may be synchronized from the file system in the subsystem 101. In addition, when configuring an IP address for the host 201 to access a subsystem, the tenant may configure an IP address for the host 201 to access the subsystem 102.

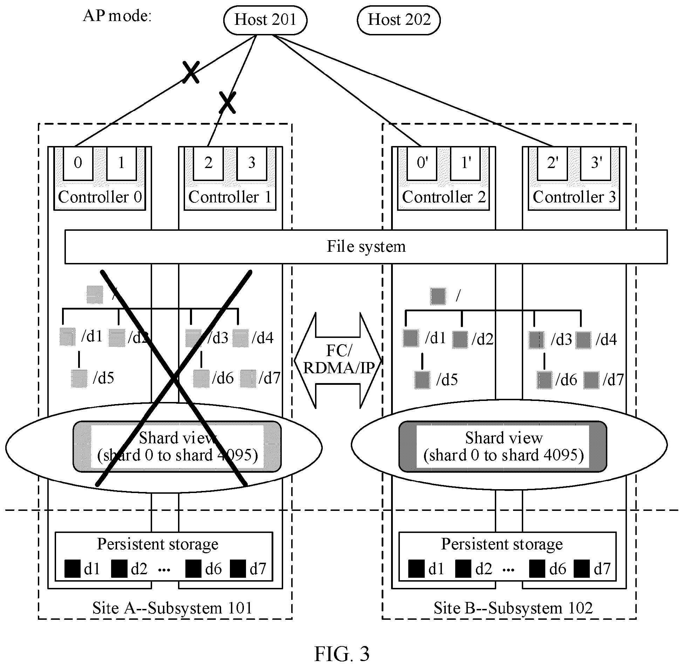

When the subsystem 101 in the site A is faulty, the subsystem 102 in the site B may take over the service on the host 201 based on the data stored in the subsystem 102, for example, the directory, the file, and the shard view, to continue to provide the service for the host 201. FIG. 3 is a diagram of continuing to provide the service by the subsystem 102 after the subsystem 101 is faulty.

In actual application, the subsystem 102 may periodically monitor a heartbeat of the subsystem 101. Specifically, the subsystem 102 may receive a heartbeat message sent by the subsystem 101. When a time interval from time at which the subsystem 102 receives a heartbeat message from the subsystem 101 last time exceeds a preset interval, the subsystem 102 may determine that the subsystem 101 is faulty. Alternatively, the subsystem 102 may determine, after receiving a notification message sent by a quorum server (not shown in FIG. 3), that the subsystem 101 is faulty. This is not limited in this embodiment.

After determining that the subsystem 101 is faulty, the subsystem 102 may float an IP address used by the host 201 to access the subsystem 101 to the subsystem 102, and enable the port 0' or the port 2' that is allocated to the host 201 and that is used to support the host 201 in accessing the subsystem 102, so that the host 201 can access the data in the subsystem 102 based on the IP address and the ports. When the subsystem 101 runs normally, in a process of providing the service for the host 201, not only generated new data is stored locally, but also the new data is synchronized to the subsystem 102. Therefore, data in a memory and a persistent storage medium of the subsystem 102 may be consistent with the data in the memory and the persistent storage medium of the subsystem 101. Therefore, the subsystem 102 may continue to provide the service for the host 201 based on the data.

It should be noted that FIG. 2 and FIG. 3 mainly describe an implementation in which the subsystem 101 and the subsystem 102 in the data processing system 100 run in the AP mode and perform disaster recovery. The following describes an implementation in which the subsystem 101 and the subsystem 102 in the data processing system 100 run in the AP mode and perform disaster recovery.

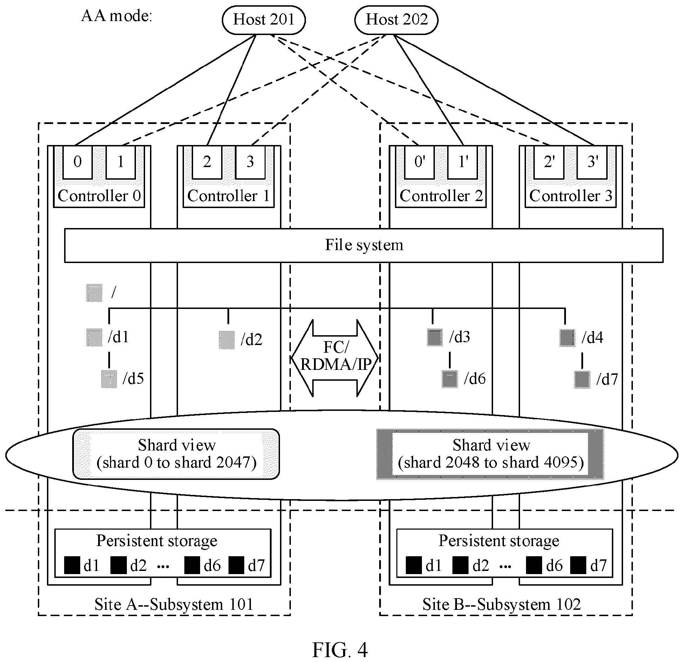

FIG. 4 is a diagram in which a subsystem in the data storage system 100 runs in the AA mode according to an embodiment of this application. As shown in FIG. 4, in the AA mode, the subsystem 101 belonging to the site A may include one or more controllers. In addition, the controller may provide a plurality of ports externally, to communicate with the host 201 in the host cluster 200 through the plurality of ports. As shown in FIG. 4, in the subsystem 101, a controller 0 may provide a port 0 and a port 1, and a controller 1 may provide a port 2 and a port 3. In addition, the subsystem 101 may perform data communication with the host 201 through the port 0 and the port 2, for example, receive a service request delivered by the host 201.

The subsystem 102 belonging to the site B includes a controller 2 and a controller 3. In addition, a port 1' of the controller 2 and a port 3' of the controller 3 perform data communication with the host 202 in the host cluster 200. The host 202 may be used as a hot backup (that is, an online backup) of the host 201, and is configured to improve reliability of a service on the host. Further, the port 0' and the port 2' in the subsystem 102 may be further allocated to the host 201, so that when the subsystem 101 is faulty, the host 201 accesses the subsystem 102 through the port 0' and the port 2' to continue to request the service. In addition, the port 1 and the port 3 in the subsystem 101 may be further allocated to the host 202, so that when the subsystem 102 is faulty, the host 202 accesses the subsystem 101 through the port 1 and the port 3 to continue to request the service.

It should be noted that in the AA mode, when the data processing system 100 runs normally, both the host 201 and the host 202 may request sites to provide services. Specifically, the host 201 may request the site A to provide a service, and the host 202 may request the site B to provide a service. In this way, when the subsystem 102 for disaster recovery is used to meet a disaster recovery requirement, the subsystem 102 provides some services for the host. Therefore, an overall service capability and system resource utilization of the data processing system 100 can be improved.

A file system may be set in the subsystem 101 included in the site A. In addition, the file system has a root directory. The root directory may be stored in a memory of the subsystem 101. After the host 201 establishes a communication connection to the subsystem 101, the subsystem 101 may mount the file system to the host 201, and provide the root directory of the file system for the host 201. In this way, the host 201 may access the file system in the subsystem 101 based on the root directory of the file system, and read data in the file system. When the host 201 requests to write data to the subsystem 101, the subsystem 101 may create a subdirectory in the root directory, and store, in the subdirectory by using a file format, the data provided by the host 201.

A file system is also set in the subsystem 102 in the site B. In addition, the file system in the subsystem 102 may have a same root directory as the file system in the subsystem 101. After the host 202 establishes a communication connection to the subsystem 102, the host 202 may access the file system in the subsystem 101, and read and write data in the file system.

Because both the subsystem 101 and the subsystem 102 can provide the service, when IP addresses for accessing subsystems are configured for the host 201 and the host 202, a same plurality of IP addresses may be allocated to the host 201 and the host 202. The plurality of IP addresses are used to support the host 201/the host 202 in accessing all files in each subdirectory of the file system, and a corresponding directory may be created in the file system, so that a file is subsequently stored in the created subdirectory. For example, the host 201 may create a subdirectory d5 in the file system by using an allocated IP address a, and the host 202 may create a subdirectory d7 in the file system by using an allocated IP address b. In actual application, home sites of the host 201 and the host 202 may be further configured. For example, the host 201 is configured to belong to the site A, and the host 202 is configured to belong to the site B. In addition, the host 201 and the host 202 preferentially access data in file systems of the home sites respectively, to avoid data transmission between different sites for files that the hosts request to access. In addition, some IP addresses are in a working state on the two sites respectively.

Different shards may be configured in the subsystem 101 and the subsystem 102. As shown in FIG. 4, 2048 shards are configured in each of the subsystem 101 and the subsystem 102. The shards in the subsystem 101 are shards 0 to 2047, and the shards in the subsystem 102 are shards 2048 to 4095. These shards are used to store directories and files of the file system in different physical nodes in the subsystems in a distributed manner, and may be used to control data distribution and access. Each physical node may be configured to store data of one or more shards. Based on data distribution of a plurality of shards, a shard view may be generated. In addition, the shard view may indicate distribution of data on different physical nodes. In this embodiment, an example in which the shard views are evenly distributed in the subsystem 101 and the subsystem 102 is used. In actual application, the shard views may not be evenly distributed in the two subsystems.

Since memory space of the subsystem 101 and the subsystem 102 is generally limited, the subsystem 101 and the subsystem 102 may periodically perform persistent storage on data in memories. Since the subsystem 101 and the subsystem 102 separately store data in a part of the shard view, before persistent storage is performed on the data in the memories, the subsystem 101 may send data in the shard 0 to the shard 2047 to the subsystem 102, and the subsystem 102 may send data in the shard 2048 to the shard 4095 to the subsystem 101. In this way, both the subsystem 101 and the subsystem 102 can obtain complete data of the 4096 shards. Then, the subsystem 101 and the subsystem 102 may separately deliver the data (data such as complete directories, files, and the shard view) in all the shards to persistent storage media for storage, and corresponding controllers support data reading and writing on the persistent storage media. In this way, the subsystem 101 and the subsystem 102 may continue to receive, based on released memory space, new data written by the host 201 and the host 202.

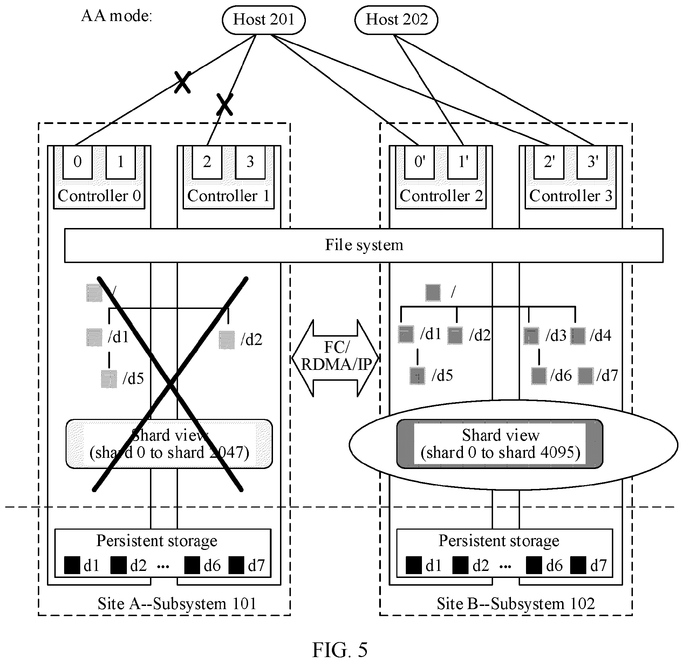

In an actual application scenario, the subsystem 101 or the subsystem 102 may be faulty in a running process. In this case, the other subsystem that runs normally may take over a service on the faulty subsystem. An example in which the subsystem 101 in the site A is faulty is used. FIG. 5 is a diagram of continuing to provide the service by the subsystem 102.

Specifically, the subsystem 101 and the subsystem 102 may monitor a heartbeat of each other at the same time. When the subsystem 101 is faulty, a time interval from time at which the subsystem 102 receives a heartbeat message from the subsystem 101 last time usually exceeds a preset interval. In this case, the subsystem 102 may determine that the subsystem 101 is faulty. Alternatively, the subsystem 101 may determine, after receiving a notification message sent by a quorum server (not shown in FIG. 5), that the subsystem 101 is faulty. This is not limited in this embodiment.

After determining that the subsystem 101 is faulty, the subsystem 102 may require the subsystem 101 to provide the data in the shard 0 to the shard 2047 stored in the memory to the subsystem 102. In this way, the shard view in the subsystem 102 may be updated to the shard 0 to the shard 4095.

In addition, the subsystem 102 may float an IP address used by the host 201 to access the subsystem 101 to the subsystem 102, and enable the port 0' and the port 2' to receive a service request delivered by the host 201. In this way, when the host 201 requests to access a file in the file system, the subsystem 102 may feed back, to the host 201, the corresponding file stored in the shard 0 to the shard 4095, to continue to provide the service for the host 201.

In an actual application scenario, a requirement of the host cluster 200 or a host in the host cluster 200 for the working mode of the data processing system 100 may change. Therefore, in this embodiment, the subsystem 101 and the subsystem 102 in the data processing system 100 support switching of the working mode between the AP mode and the AA mode, to meet the requirement of the host cluster for the working mode between the subsystem 101 and the subsystem 102, and improve universality of the data processing system 100 in providing services. The data processing system 100 may support switching of the working mode between the subsystem 101 and the subsystem 102 from the AP mode to the AA mode, and may switch from the AA mode to the AP mode.

In this embodiment, the data processing apparatus 400 in the data processing system 100 may switch the working mode between the subsystem 101 and the subsystem 102. During specific implementation, the receiving unit 401 may receive the configuration instruction. The configuration instruction is used to instruct the data processing apparatus 400 to switch the working mode between the subsystem 101 and the subsystem 102 from the AP mode to the AA mode or from the AA mode to the AP mode.

In some examples, this embodiment provides the following several implementations of receiving the configuration instruction.

In a first possible implementation, the data processing apparatus 400 may externally provide a client, so that when determining that the working mode between the subsystem 101 and the subsystem 102 needs to be switched, the tenant or the administrator delivers the configuration instruction to the data processing apparatus 400 through the client, to instruct the data processing apparatus 400 to switch the working mode between the subsystem 101 and the subsystem 102 from a current mode to another mode. The receiving unit 401 receives the configuration instruction.

In a second possible implementation, the data processing apparatus 400 may detect a networking mode of a host currently connected to the data processing system 100. The networking mode of the host may be parallel networking or full-cross networking. Parallel networking means that no cross connection may be established between different hosts in a network, for example, a data communication channel may not be directly established between the different hosts. In addition, when a host using the parallel networking mode is connected to the data processing system 100, the subsystem 101 and the subsystem 102 generally run in the AP mode to provide a corresponding service for the host. Full-cross networking means that a connection may be established between the different hosts in the network, so that the different hosts may perform data communication with each other through the communication connection. In addition, when a host using the full-cross networking mode is connected to the data processing system 100, the subsystem 101 and the subsystem 102 generally run in the AA mode to provide a corresponding service for the host. In actual application, the networking mode of the host may also be another mode. This is not limited in this embodiment.

In this way, the receiving unit 401 may determine, by detecting the networking mode of the host, whether the networking mode of the host currently connected to the data processing system 100 matches the working mode between the subsystem 101 and the subsystem 102. If the networking mode of the host currently connected to the data processing system 100 does not match the working mode between the subsystem 101 and the subsystem 102, the receiving unit 401 may generate the configuration instruction to trigger switching of the working mode between the subsystem 101 and the subsystem 102; or if the networking mode of the host currently connected to the data processing system 100 matches the working mode between the subsystem 101 and the subsystem 102, the data processing apparatus 400 does not need to switch the working mode between the subsystem 101 and the subsystem 102.

The foregoing two implementations of receiving the configuration instruction are merely used as examples for description. In another embodiment, the receiving unit may obtain the configuration instruction in another manner. This is not limited in this embodiment.

After receiving the configuration instruction, the receiving unit 401 may send the configuration instruction to the processing unit 402, so that the processing unit 402 performs an operation of switching the working mode between the subsystem 101 and the subsystem 102.

With reference to the accompanying drawings, the following describes an example of a specific implementation process in which the processing unit 402 switches the working mode between the subsystem 101 and the subsystem 102.

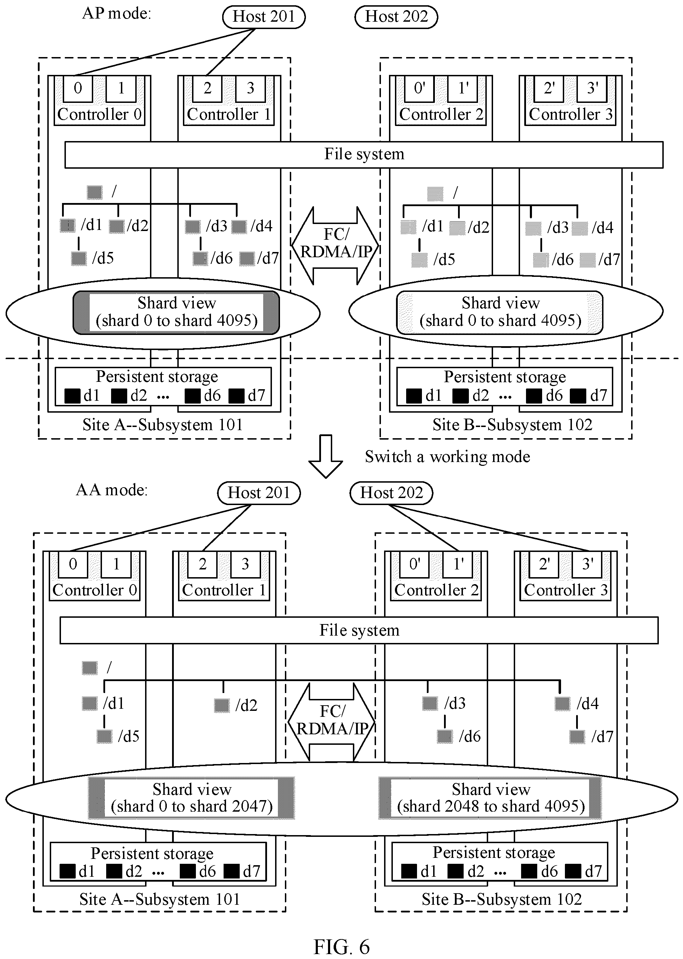

FIG. 6 is a diagram of switching the working mode between the subsystem 101 and the subsystem 102 from the AP mode to the AA mode.

As shown in FIG. 6, when the working mode between the subsystem 101 and the subsystem 102 is switched to the AA mode, the subsystem 102 may support the host 202 in requesting the service from the subsystem 102.

During specific implementation, the processing unit 402 may indicate the subsystem 102 in the site B to allocate the port 1' of the controller 2 and the port 3' of the controller 3 to the host 202, so that the host 202 may access the file system in the subsystem 102 through the port 1' or the port 3'.

In addition, the processing unit 402 may indicate the subsystem 101 to migrate data in some shards to the subsystem 102, and update the shard views in the subsystem 101 and the subsystem 102 respectively. For example, if the subsystem 101 migrates data in the shard 2048 to the shard 4095 to the subsystem 102, updated shard views in the subsystem 101 and the subsystem 102 are shown in FIG. 6.

Because both the host 201 and the host 202 may request a service from a site, the processing unit 402 may indicate the subsystem 102 to allocate, to the host 202, an IP address for accessing a file in a subdirectory. Further, the subsystem 102 may further specify the site B as the home site of the host 202. In this way, when accessing the file in the subdirectory (for example, accessing files in subdirectories d6 and d7), the host 202 may preferentially access the subsystem 102 in the site B to which the host 202 belongs, and may obtain data required by the host 202 from the subsystem 102 based on the shard view (for example, the shard 2048 to the shard 4095) in the subsystem 102. In this way, data transmission performed between different sites for the files because of access of the subsystem 101 by the host 202 can be avoided. In addition, the subsystem 101 may specify the site A as the home site of the host 201, so that the host 201 preferentially accesses the subsystem 101 in the site A.

In this way, the working mode between the subsystem 101 and the subsystem 102 can be switched from the AP mode to the AA mode.

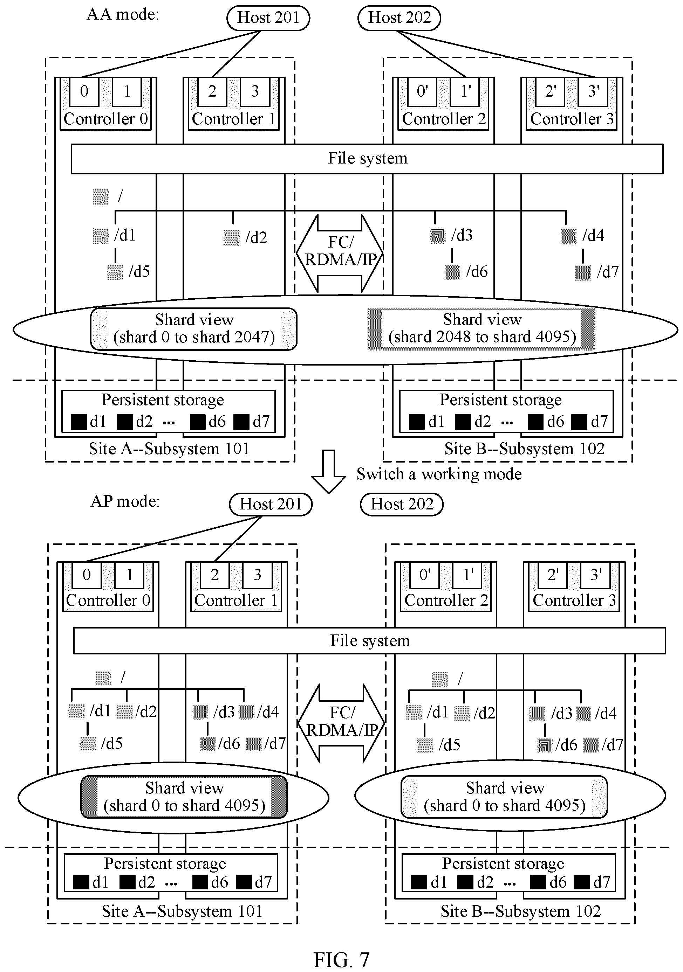

FIG. 7 is a diagram of switching the working mode between the subsystem 101 and the subsystem 102 from the AA mode to the AP mode.

As shown in FIG. 7, when the working mode between the subsystem 101 and the subsystem 102 is switched to the AP mode, the subsystem 102 does not support the host 202 in requesting the service from the subsystem 102.

During specific implementation, the processing unit 402 may indicate the subsystem 102 in the site B to allocate the port 0' and the port 2' to the host 201, so that when the subsystem 101 is faulty, the host 201 may access the file system in the subsystem 102 through the port 0' or the port 2'. In the AP mode, the data processing system 100 supports only the host 201 in requesting a service from a site. Therefore, the subsystem 102 may disable an IP address that is previously allocated to the host 202 and that is used to access the file in the subdirectory.

In addition, when the subsystem 101 and the subsystem 102 run in the AA mode, the shards in the subsystem 101 and the subsystem 102 are all partial shards. Therefore, during switching to the AP mode, the processing unit 402 may indicate the subsystem 101 to back up the data in all the shards to the subsystem 102, the subsystem 102 may back up the data in all the shards to the subsystem 101, and the shard views are updated in the subsystem 101 and the subsystem 102 respectively. For example, it is assumed that in the AA mode, the shards in the subsystem 101 and the subsystem 102 are a shard 0 to a shard 2047 and a shard 2048 to shard 4095 respectively. During switching to the AP mode, after the subsystem 101 and the subsystem 102 back up shard data mutually, updated shard views in the subsystem 101 and the subsystem 102 are shown in FIG. 7.

In this way, a working mode between different subsystems in the data processing system 100 can be flexibly switched between the AP mode and the AA mode, to meet a requirement of an actual application scenario.

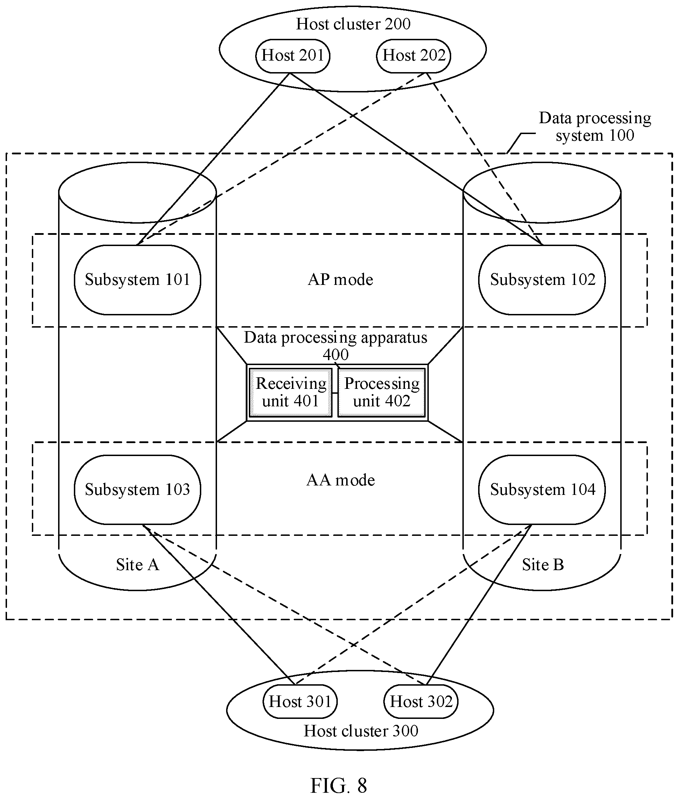

It should be noted that a system architecture of the data processing system 100 shown in FIG. 1 is merely used as an example, and is not intended to limit specific implementation of the data processing system 100 to the example. For example, the data processing system 100 shown in FIG. 8 may further include a subsystem 103 and a subsystem 104 in addition to the subsystem 101 and the subsystem 102. In addition, both the subsystem 101 and the subsystem 103 belong to the site A, and both the subsystem 102 and the subsystem 104 belong to the site B. In the data processing system shown in FIG. 8, the subsystem 101 to the subsystem 104 may be used to support providing services corresponding to the AP mode and the AA mode at the same time. Specifically, the subsystem 101 and the subsystem 102 may run in the AP mode to provide the service corresponding to the AP mode for the host 201 and the host 202 in the host cluster 200. The subsystem 103 and the subsystem 104 may run in the AA mode to provide the service corresponding to the AA mode for the host 301 and the host 302 in the host cluster 300.

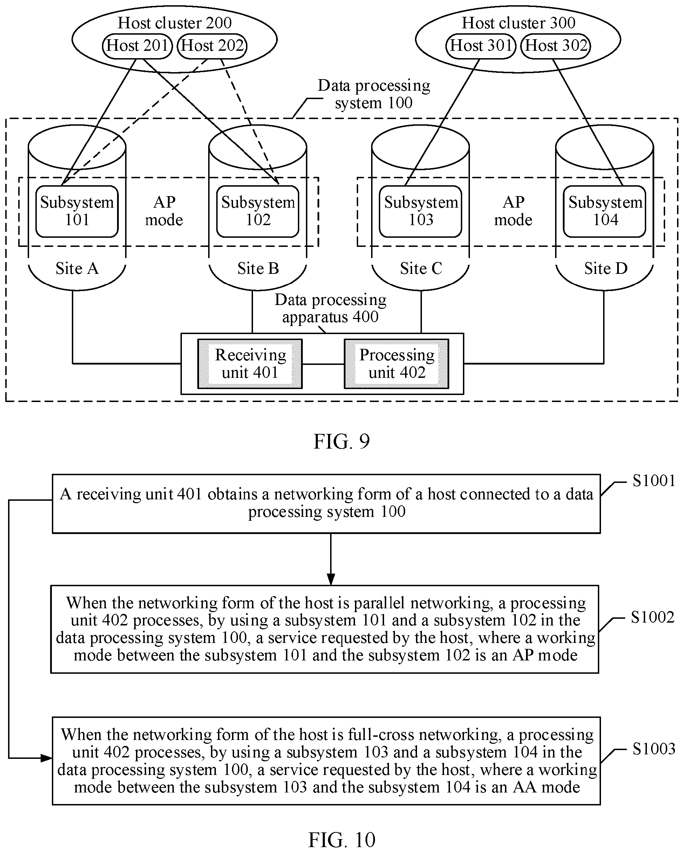

For another example, similar to the data processing system 100 shown in FIG. 8, the data processing system 100 shown in FIG. 9 also includes the subsystem 101 to a subsystem 104, and supports providing services respectively corresponding to the AP mode and the AA mode. A difference lies in that in the data processing system 100 shown in FIG. 9, the subsystem 101 to the subsystem 104 belong to different sites. Specifically, the subsystem 101 belongs to the site A, the subsystem 102 belongs to the site B, a subsystem 103 belongs to a site C, and the subsystem 104 belongs to a site D. A specific architecture of the data processing system is not limited in this application.

In this way, in the data processing system 100 shown in FIG. 8 or FIG. 9, for some tenants that require the AP mode, the data processing system 100 may process, by using the subsystem 101 and the subsystem 102, services requested by hosts of the tenants, and for other tenants that require the AA mode, the data processing system 100 may process, by using the subsystem 103 and the subsystem 104, services requested by hosts of the tenants. Because different subsystems in the data processing system 100 run in the AP mode and the AA mode, the data processing system 100 may select, based on a requirement of a tenant, a subsystem in a corresponding working mode to provide a service for a host of the tenant. Therefore, service requirements of different hosts in an actual application scenario can be met, and universality of the data processing system 100 in providing services can be improved.

It should be noted that the data processing system 100 shown in FIG. 2 to FIG. 9 is described by using an example in which the data storage service is provided for the tenant and the data storage service is specifically a file storage service. That is, data stored in the data processing system 100 may be stored in a form of a file. In another possible implementation, the data storage service provided by the data processing system 100 may be a block storage service or an object storage service. The block storage service means that when storing the data, the data processing system 100 divides the data into blocks according to a fixed size. A data volume of each block may be, for example, 512 bytes or 4 kilobytes (KB). The object storage service means that the data processing system 100 stores the data as an object (object). In this case, the object may be a basic unit for data storage in the data processing system 100. Each object may be a combination of data and a data attribute. The data attribute may be set based on an application requirement, including data distribution, quality of service, and the like. In actual application, the data processing system 100 may also provide another type of service, for example, a data computing service like a model training service or a data statistics service. This is not limited in this embodiment.

In addition, the data processing system 100 shown in FIG. 1 to FIG. 9 is applicable to a centralized storage application scenario or a distributed storage application scenario.

In the centralized storage application scenario, each subsystem may include one or more computing nodes that form a central node, and all data processing services in the entire subsystem may be deployed on the central node in a centralized manner. In this case, a disk-controller separate architecture may be used between the computing node and a storage device, that is, the computing node and the storage device are independently deployed. Alternatively, a disk-controller integrated architecture may be used between the computing node and a storage device, that is, the computing node may have a slot, and the storage device is placed in the computing node through the slot, and is integrated with the computing node.

In the distributed storage application scenario, data in each subsystem may be stored on a plurality of independent storage nodes in a distributed manner. In this case, the computing node may be integrated with a storage device, so that the computing node has both a computing capability and a storage capability, and a virtual machine may be created on the computing node, or a virtual machine may not be created on the computing node. Alternatively, a storage and computing separate architecture may be used between the computing node and a storage device, that is, the computing node and the storage device are independently deployed and communicate with each other through a network. In addition, the storage device may include one or more different storage media. This is not limited in this embodiment.

In addition, when the host of the tenant is connected to the data processing system 100, the administrator may configure, based on the requirement of the tenant, the host of the tenant to be connected to a subsystem running in the AP mode, or to be connected to a subsystem running in the AA mode. In another implementation, the data processing system 100 may automatically connect the host to a proper subsystem based on the networking mode of the host. The following describes this automation process in detail with reference to the accompanying drawings.

FIG. 10 is a schematic flowchart of a data processing method according to an embodiment of this application. The method may be applied to the data processing system 100 shown in FIG. 1, FIG. 8, or FIG. 9. In actual application, the method may also be applied to another data processing system to which the method is applicable. For ease of understanding and description, the following uses an example in which the method is applied to the data processing system 100 shown in FIG. 8 for description. The method may specifically include the following steps.

S901: The receiving unit 401 obtains a networking form of a host connected to the data processing system 100.

The networking form of the host may be parallel networking, full-cross networking, or the like, or may be another type of networking mode. Parallel networking means that no cross connection may be established between different hosts in a network, for example, a data communication channel may not be directly established between the different hosts. Full-cross networking means that a connection may be established between the different hosts in the network, so that the different hosts may perform data communication with each other through the communication connection.

S902: When the networking form of the host is parallel networking, the processing unit 402 processes, by using the subsystem 101 and the subsystem 102 in the data processing system 100, a service requested by the host, where a working mode between the subsystem 101 and the subsystem 102 is an AP mode.

S903: When the networking form of the host is full-cross networking, the processing unit 402 processes, by using the subsystem 103 and the subsystem 104 in the data processing system 100, a service requested by the host, where a working mode between the subsystem 103 and the subsystem 104 is an AA mode.

In this embodiment, based on a requirement of an actual application scenario, a host whose networking form is parallel networking may be connected to the subsystem 101 that runs in the AP mode, and an access port and an IP address on the subsystem 102 may be automatically configured for the host, so that after the subsystem 101 is faulty, the host may access the subsystem 102, to implement uninterrupted service processing.

A host whose networking form is full-cross networking may be connected to the subsystem 103 that runs in the AA mode, another host that is used as a hot backup of the host is connected to the subsystem 104, and a same IP address and sites to which the two hosts respectively belong are configured for the two hosts, so that the subsystem 103 and the subsystem 104 respectively provide services requested by the hosts respectively connected to the subsystem 103 and the subsystem 104.

In a further possible implementation, when a requirement of the host for a working mode of a subsystem to which the host is connected changes, the working mode of the subsystem to which the host is connected may be automatically switched. For example, when the host requires that a working mode of the subsystem 101 be switched from the AP mode to the AA mode, the subsystem 101 may automatically switch the working modes between the subsystems 101 and the subsystem 102 to the AA mode based on the manner shown in FIG. 6, to meet an actual application requirement of the host. For a specific implementation process, refer to related descriptions in the foregoing embodiment. Details are not described herein again. The process of switching the working mode may be automatically performed by the subsystem to which the host is connected. Alternatively, the working mode of the subsystem may be automatically switched under control of a quorum server or another device. This is not limited in this embodiment.

The foregoing nonrestrictive implementations in embodiments of this application described with reference to the accompanying drawings are merely used as examples for description. Apparently, the described embodiments are some rather than all of the embodiments of this application. All other embodiments obtained based on the foregoing content in embodiments of this application shall fall within the protection scope of this application.

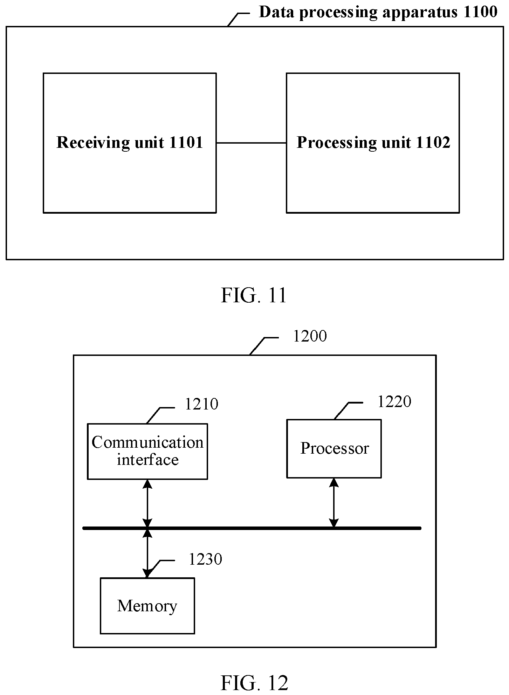

The foregoing describes in detail the data processing system and the data processing method provided in this application with reference to FIG. 1 to FIG. 10. The following describes, with reference to FIG. 11 and FIG. 12, a data processing apparatus and a computing device that implements a function of the data processing apparatus according to this application.

Based on a same inventive concept as the foregoing method, an embodiment of this application further provides a data processing apparatus. As shown in FIG. 11, the data processing apparatus 1100 is used in a data processing system, for example, the data processing system 100 shown in FIG. 1 to FIG. 10. The data processing system includes a first subsystem and a second subsystem, for example, the subsystem 101 and the subsystem 102. The data processing apparatus 100 shown in FIG. 11 includes:
a receiving unit 1101, configured to receive a configuration instruction; and
a processing unit 1102, configured to switch the first subsystem and the second subsystem from a first mode to a second mode according to the configuration instruction, where the first mode is one of an active-passive AP mode and an active-active AA mode in which the first subsystem and the second subsystem work, and the second mode is the other of the AP mode and the AA mode in which the first subsystem and the second subsystem work.

In a possible implementation, the first subsystem and the second subsystem provide a data processing service for a host of a target tenant based on the first mode. In addition, after the working mode between the first subsystem and the second subsystem is switched to the second mode, the first subsystem and the second subsystem provide the data processing service for the host of the target tenant based on the second mode.

In a possible implementation, the receiving unit 1101 is specifically configured to detect that a networking mode of the host connected to the data processing system is switched from a first networking mode to a second networking mode.

In a possible implementation, the first networking mode is one of a parallel networking mode and a full-cross networking mode, and the second networking mode is the other of the parallel networking mode and the full-cross networking mode.

In a possible implementation, the data processing system further includes a third subsystem and a fourth subsystem. When the first subsystem and the second subsystem work in the second mode, the third subsystem and the fourth subsystem work in the first mode.

In a possible implementation, the first subsystem and the third subsystem belong to a first site, and the second subsystem and the fourth subsystem belong to a second site.

In a possible implementation, the first subsystem and the second subsystem are configured to provide a data storage service for the target tenant. The first subsystem includes at least one storage array.

In a possible implementation, the first subsystem communicates with the second subsystem by using at least one of IP protocol, an RDMA protocol, or an FC.

In a possible implementation, the data storage service provided by the first subsystem and the second subsystem is a file storage service.

In a possible implementation, the data storage service provided by the first subsystem and the second subsystem is a block storage service.

In a possible implementation, the data storage service provided by the first subsystem and the second subsystem is an object storage service.

The data processing apparatus 1100 shown in FIG. 11 corresponds to the data processing apparatus 400 in the foregoing embodiment. Therefore, for specific implementation technical effects of the data processing apparatus 1100, refer to related descriptions in the foregoing embodiment. Details are not described herein again.

An embodiment of this application further provides a computing device. As shown in FIG. 12, the computing device 1200 may include a communication interface 1210 and a processor 1220. Optionally, the computing device 1200 may further include a memory 1230. The memory 1230 may be disposed inside the computing device 1200, or may be disposed outside the computing device 1200. For example, all actions performed by the data processing apparatus 400 in the embodiments shown in FIG. 1 to FIG. 10 may be implemented by the processor 1220. The processor 1220 may obtain a configuration instruction through the communication interface 1210, and is configured to implement the method in FIG. 9. In an implementation process, steps of a processing procedure may be performed by a hardware integrated logic circuit of the processor 1220 or by instructions in a form of software, to complete the method in FIG. 9. For brevity, details are not described herein again. Program code executed by the processor 1220 to implement the foregoing method may be stored in the memory 1230. The memory 1230 is connected, for example, coupled, to the processor 1220.

Some features in this embodiment of this application may be implemented/supported by the processor 1220 by executing program instructions or software code in the memory 1230. Software components loaded to the memory 1230 may be summarized in terms of functions or logic, for example, the processing unit 1102 shown in FIG. 11. A function of the receiving unit 1101 may be implemented by the communication interface 1210.

Any communication interface in this embodiment of this application may be a circuit, a bus, a transceiver, or another apparatus that may be configured to exchange information, for example, the communication interface 1210 in the computing device 1200. For example, the another apparatus may be a device connected to the computing device 1200.

In this embodiment of this application, the processor may be a general-purpose processor, a digital signal processor, an application-specific integrated circuit, a field programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware and software units in the processor.

In this embodiment of this application, coupling is indirect coupling or a communication connection between apparatuses, units, or units, may be in electrical, mechanical or other forms, and is used for information exchange between apparatuses, units, or units.

The processor may perform an operation in collaboration with the memory. The memory may be a nonvolatile memory, for example, a hard disk drive or a solid state drive, or may be a volatile memory, for example, a random access memory. The memory is, but not limited to, any other medium that can carry or store expected program code in a form of an instruction or a data structure and that can be accessed by a computer.

A specific connection medium between the communication interface, the processor, and the memory is not limited in this embodiment of this application. For example, the memory, the processor, and the communication interface may be connected through a bus. The bus may be classified as an address bus, a data bus, a control bus, and the like.

Based on the foregoing embodiments, an embodiment of this application further provides a computer storage medium. The storage medium stores a software program. When the software program is read and executed by one or more processors, the method performed by the data processing apparatus 400 provided in any one or more of the foregoing embodiments may be implemented. The computer storage medium may include any medium capable of storing program code, for example, a USB flash drive, a removable hard disk, a read-only memory, a random access memory, a magnetic disk, or an optical disc.

Based on the foregoing embodiments, an embodiment of this application further provides a chip. The chip includes a processor, configured to implement a function of the data processing apparatus 400 in the foregoing embodiments, for example, configured to implement the method performed in FIG. 9. Optionally, the chip further includes a memory. The memory is configured to store necessary program instructions to be executed by the processor and data. The chip may include a chip, or include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

In the specification, claims, and the accompanying drawings of this application, the terms "first", "second", "third", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

Apparently, a person skilled in the art may make various modifications and variations to embodiments of this application without departing from the scope of embodiments of this application. This application is intended to cover these modifications and variations provided that they fall within the scope of protection defined by the following claims and their equivalent technologies.

## Claims

1. A data processing system, comprising a first subsystem and a second subsystem, wherein the data processing system comprises a receiving unit and a processing unit, wherein
the receiving unit is configured to receive a configuration instruction; and
the processing unit is configured to switch the first subsystem and the second subsystem from a first mode to a second mode according to the configuration instruction, wherein the first mode is one of an active-passive AP mode and an active-active AA mode in which the first subsystem and the second subsystem work, and the second mode is the other of the AP mode and the AA mode in which the first subsystem and the second subsystem work.

2. The data processing system according to claim 1, wherein the first subsystem and the second subsystem provide a data processing service for a host of a target tenant based on the first mode, and after a working mode between the first subsystem and the second subsystem is switched to the second mode, the first subsystem and the second subsystem provide the data processing service for the host of the target tenant based on the second mode.

3. The data processing system according to claim 1 or 2, wherein the receiving unit is specifically configured to detect that a networking mode of a host connected to the data processing system is switched from a first networking mode to a second networking mode.

4. The data processing system according to claim 3, wherein the first networking mode is one of a parallel networking mode and a full-cross networking mode, and the second networking mode is the other of the parallel networking mode and the full-cross networking mode.

5. The data processing system according to any one of claims 1 to 4, wherein the data processing system further comprises a third subsystem and a fourth subsystem; and when the first subsystem and the second subsystem work in the second mode, the third subsystem and the fourth subsystem work in the first mode.

6. The data processing system according to claim 5, wherein the first subsystem and the third subsystem belong to a first site, and the second subsystem and the fourth subsystem belong to a second site.

7. The data processing system according to any one of claims 1 to 6, wherein the first subsystem and the second subsystem are configured to provide a data storage service for the target tenant, and the first subsystem comprises at least one storage array.

8. The data processing system according to any one of claims 1 to 7, wherein the first subsystem communicates with the second subsystem by using at least one of an internet protocol IP, a remote direct memory access RDMA protocol, or a fibre channel FC.

9. The data processing system according to any one of claims 1 to 8, wherein the data storage service provided by the first subsystem and the second subsystem is a file storage service.

10. The data processing system according to any one of claims 1 to 8, wherein the data storage service provided by the first subsystem and the second subsystem is a block storage service.

11. The data processing system according to any one of claims 1 to 8, wherein the data storage service provided by the first subsystem and the second subsystem is an object storage service.

12. A data processing method, wherein the method is applied to a data processing system, the data processing system comprises a first subsystem, a second subsystem, a receiving unit, and a processing unit, and the method comprises:
receiving, by the receiving unit, a configuration instruction, and providing the configuration instruction for the processing unit; and
switching, by the processing unit, the first subsystem and the second subsystem from a first mode to a second mode according to the configuration instruction, wherein the first mode is one of an active-passive AP mode and an active-active AA mode in which the first subsystem and the second subsystem work, and the second mode is the other of the AP mode and the AA mode in which the first subsystem and the second subsystem work.

13. The method according to claim 12, wherein the first subsystem and the second subsystem provide a data processing service for a host of a target tenant based on the first mode, and after a working mode between the first subsystem and the second subsystem is switched to the second mode, the first subsystem and the second subsystem provide the data processing service for the host of the target tenant based on the second mode.

14. The method according to claim 12 or 13, wherein the receiving, by the receiving unit, a configuration instruction comprises:
detecting, by the receiving unit, that a networking mode of a host connected to the data processing system is switched from a first networking mode to a second networking mode.

15. The method according to claim 14, wherein the first networking mode is one of a parallel networking mode and a full-cross networking mode, and the second networking mode is the other of the parallel networking mode and the full-cross networking mode.

16. The method according to any one of claims 12 to 15, wherein the data processing system further comprises a third subsystem and a fourth subsystem; and when the first subsystem and the second subsystem work in the second mode, the third subsystem and the fourth subsystem work in the first mode.

17. The method according to claim 16, wherein the first subsystem and the third subsystem belong to a first site, and the second subsystem and the fourth subsystem belong to a second site.

18. The method according to any one of claims 12 to 17, wherein the first subsystem and the second subsystem are configured to provide a data storage service for the target tenant, and the first subsystem comprises at least one storage array.

19. The method according to any one of claims 12 to 18, wherein the first subsystem communicates with the second subsystem by using at least one of an internet protocol IP, a remote direct memory access RDMA protocol, or a fibre channel FC.

20. The method according to any one of claims 12 to 19, wherein the data storage service provided by the first subsystem and the second subsystem is a file storage service.

21. The method according to any one of claims 12 to 19, wherein the data storage service provided by the first subsystem and the second subsystem is a block storage service.

22. The method according to any one of claims 12 to 19, wherein the data storage service provided by the first subsystem and the second subsystem is an object storage service.

23. A data processing apparatus, wherein the data processing apparatus is used in a data processing system, the data processing system comprises a first subsystem and a second subsystem, and the data processing apparatus comprises:
a receiving unit, configured to receive a configuration instruction; and
a processing unit, configured to switch the first subsystem and the second subsystem from a first mode to a second mode according to the configuration instruction, wherein the first mode is one of an active-passive AP mode and an active-active AA mode in which the first subsystem and the second subsystem work, and the second mode is the other of the AP mode and the AA mode in which the first subsystem and the second subsystem work.

24. The data processing apparatus according to claim 23, wherein the first subsystem and the second subsystem provide a data processing service for a host of a target tenant based on the first mode, and after a working mode between the first subsystem and the second subsystem is switched to the second mode, the first subsystem and the second subsystem provide the data processing service for the host of the target tenant based on the second mode.

25. The data processing apparatus according to claim 23 or 24, wherein the receiving unit is specifically configured to detect that a networking mode of a host connected to the data processing system is switched from a first networking mode to a second networking mode.

26. The data processing apparatus according to claim 25, wherein the first networking mode is one of a parallel networking mode and a full-cross networking mode, and the second networking mode is the other of the parallel networking mode and the full-cross networking mode.

27. The data processing apparatus according to any one of claims 23 to 26, wherein the data processing system further comprises a third subsystem and a fourth subsystem; and when the first subsystem and the second subsystem work in the second mode, the third subsystem and the fourth subsystem work in the first mode.

28. The data processing apparatus according to claim 27, wherein the first subsystem and the third subsystem belong to a first site, and the second subsystem and the fourth subsystem belong to a second site.

29. The data processing apparatus according to any one of claims 23 to 28, wherein the first subsystem and the second subsystem are configured to provide a data storage service for the target tenant, and the first subsystem comprises at least one storage array.

30. The data processing apparatus according to any one of claims 23 to 29, wherein the first subsystem communicates with the second subsystem by using at least one of an internet protocol IP, a remote direct memory access RDMA protocol, or a fibre channel FC.

31. The data processing apparatus according to any one of claims 23 to 30, wherein the data storage service provided by the first subsystem and the second subsystem is a file storage service.

32. The data processing apparatus according to any one of claims 23 to 30, wherein the data storage service provided by the first subsystem and the second subsystem is a block storage service.

33. The data processing apparatus according to any one of claims 23 to 30, wherein the data storage service provided by the first subsystem and the second subsystem is an object storage service.

34. A computing device, wherein the computing device comprises a processor and a memory; and
the processor is configured to execute instructions stored in the memory, so that the computing device performs the method according to any one of claims 12 to 22.

35. A computer-readable storage medium, wherein the computer-readable storage medium stores instructions; and when the instructions are run on a computing device, the computing device is enabled to perform the method according to any one of claims 12 to 22.

36. A computer program product comprising instructions, wherein when the computer program product runs on a computing device, the computing device is enabled to perform the method according to any one of claims 12 to 22.
